# EUROPÄISCHE PATENTSCHRIFT

(11) **EP 0 953 404 B1**
(45) Veröffentlichungstag und Bekanntmachung des Hinweises auf die Patenterteilung: **29.10.2003**
(21) Anmeldenummer: 99105519.5
(22) Anmeldetag: 18.03.1999
(51) Int. Cl.: B23Q 11/00, F16F 15/32, B23B 31/117, B23B 31/02, F16F 15/34

(54) **Rotierender Werkzeughalter mit einer Auswuchtvorrichtung**
Rotating tool-holder with a balancing device
Porte-outil rotatif avec dispositif d'équilibrage

(30) Priorität: 30.04.1998 IT MI980941
(43) Veröffentlichungstag der Anmeldung: 03.11.1999
(73) Patentinhaber: D Andrea S.p.A., 20020 Lainate (IT)
(72) Erfinder: D'Andrea Ermanno, 20020 Lainate (IT)
(74) Vertreter: Mayer, Hans Benno, Dipl.-Ing.

(56) Entgegenhaltungen:
- DE-A- 4 038 121
- DE-U- 8 708 770
- US-A- 4 842 485
- US-A- 4 865 336
- US-A- 5 074 723
- PATENT ABSTRACTS OF JAPAN vol. 017, no. 595 (M-1503), 29. Oktober 1993 (1993-10-29) -& JP 05 177495 A (DAISHOWA SEIKI CO LTD), 20. Juli 1993 (1993-07-20)
- PATENT ABSTRACTS OF JAPAN vol. 004, no. 114 (M-026), 15. August 1980 (1980-08-15) -& JP 55 072937 A (HITACHI LTD), 2. Juni 1980 (1980-06-02)

## Beschreibung

Die vorstehende Erfindung betrifft einen rotierenden Werkzeughalter mit einer Auswuchtvorrichtung.

Die Auswuchtvorrichtung weist Auswuchtkoerper auf, die in ihrer Lage gegenueber dem Werkzeugkoerper einstellbar sind.

Es ist bekannt, dass zur Verminderung der Bearbeitungszeiten heute Werkzeugmaschinen zum Einsatz gelangen, deren Spindeln mit sehr hoher Geschwindigkeit angetrieben werden, z.B. in einer Groessenordnung von 20.000 bis 60.000 Umdrehungen pro Minute.

Die in diesen Hochleistungsmaschinen eingesetzten Werkzeuge sind aeusserst genau auszuwuchten, um zu vermeiden, dass waehrend der Drehbewegung der Spindel Schwingungen auftreten, die zu einer Beschaedigung der Spindellagerung fuehren koennten, oder Grund einer Verschlechterung der Oberflaechenqualitaet des bearbeiteten Werkstueckes sein koennten.

Um diese Unzulaenglichkeiten zu beheben, finden derzeitig Werkzeughalter Verwendung, die mit radial angeordneten Gewindeloechern ausgeruestet sind.

In diese Gewindeloecher werden Gewindestifte eingeschraubt, die eine ganz bestimmte Masse aufweisen.

Dieser bekannte Werkzeughalter wird dadurch ausgewuchtet, dass die Lage der Gewindestifte in der Gewindebohrung gegenueber dem Koerper des Werkzeughalter veraendert wird. Der bekannte Werkzeughalter hat den Nachteil, dass der Auswuchtvorgang durch Annaeherung und wiederholte Versuche durchgefuehrt werden muss.

Ein weiterer Nachteil dieser bekannten Werkzeughalter ist darin zu sehen, dass bei der Forderung eines hochpraezisen Auswuchtvorganges Schwierigkeiten auftreten, da es nicht einfach ist, mit wiederholbarer Genauigkeit die oertliche Lage der Auswuchtstifte gegenueber der Schwerkpunktachse des Werkzeughalters festzulegen.

Es sind auch Werkzeughalter bekannt geworden, die eine Vielzahl exzentrisch angeordneter Ringe aufweisen, die am Koerper des Werkzeughalters gelagert sind.

Bei diesen Werkzeughaltern ist es moeglich, ein Auswuchten des Werkzeughalters durch unterschiedliche Winkeleinstellungen der exzentrisch vorgesehenen Ringe gegenueber dem Koerper des Werkzeughalters vorzunehmen.

Auch bei diesen bekannten Werkzeughaltern ist der Auswuchvorgang nur annaehernd durchfuehrbar und die erzielbare Praezision ist nicht geeignet, Werkzeuge in Spindeln einzusetzen, die mit sehr hoher Drehzahl angetrieben werden.

Ferner weisen die beschriebenen Werkzeughalter komplexe Einrichtungen zum Befestigen und Spannen der exzentrischen Ringe in einer gewuenschten Lage auf.

Derartige Werkzeughalter haben einen komplexen Aufbau und sind nicht ganz einfach zu handhaben.

Aufgabe der vorstehenden Erfindung ist es, die beschriebenen Nachteile des Standes der Technik zu vermeiden und einen Werkzeughalter vorzuschlagen, der eine integrierte Auswuchteinrichtung aufweist, die einfach im Aufbau und einfach in der Handhabung ist.

Eine weitere Aufgabe der Erfindung ist darin zu sehen, einen Werkzeughalter zu schaffen, der mit einer Auswuchteinrichtung versehen ist, die ein Einstellen mit hoechster Praezision ermoeglicht.

Diese Aufgaben werden mit einem rotierenden Werkzeughalter geloest, der eine Auswuchtvorrichtung aufweist, die aus Auswuchtgewichten besteht, die gegenueber dem Koerper des Werkzeughalters in ihrer Lage einstellbar sind und dadurch gekennzeichnet sind, dass der Koerper des Werkzeughalters eine Umfangsnute aufweist, die T-foermigen Querschnitt hat und diese Umfangsnute Auswuchtgewichte aufnimmt, die im Querschnitt U-foermig ausgebildet sind, und die Arme der U-foermigen Auswuchtsgewichte elastisch verformbar ausgebildet sind und an ihren Enden Verdickungen aufweisen, die mit einem hinterschnittenen Teil der Umfangsnute verbindbar sind und im Koerper der Auswuchtgewichte eine durchgehende Gewindebohrung vorgesehen ist, die einen Gewindestift zum Festlegen der Lage des Auswuchtgewichtes in der Nute aufweist.

Ein wesentlicher Vorteil der Erfindung ist darin zu sehen, dass die Auswuchteinrichtung in den Koerper des Werkzeughalters integriert ist.

Auf diese Weise hat man die Moeglichkeit, einen Werkzeughalter mit aeusserst einfachem Aufbau und gedrungenen Abmessungen zu schaffen.

Die Umfangsnute fuer die Aufnahme der Auswuchtgewichte fuehrt nicht zu einer Veraenderung des Aufbaues oder der Form des Werkzeughalters und erfordert nicht die Durchfuehrung aufwendiger Bearbeitungsvorgaenge bei der Fertigung des Werkzeughalters.

Der erfindungsgemaesse Werkzeughalter hat sich als einfach in seiner Handhabung erwiesen.

Durch Einsetzen von Auswuchgewichten in die Umfangsnut des Werkzeughalters und durch Einstellen der Winkellage der Auswuchtgewichte durch Verschieben derselben in der Umfangsnut wird es moeglich, den Schwerpunkt der Kombination von Werkzeughalter und Werkzeug gegenueber der Drehachse des Werkzeughalters zu veraendern, um dadurch ein Auswuchten mit der gewuenschten Genauigkeit zu erreichen.

Mit dem vorgeschlagenen Werkzeughalter ist es ferner moeglich, den Auswuchtvorgang beliebig oft durchzufuehren, in Abhaengigkeit z.B. des Abnuetzungsgrades der Schneide des spanabhebenden Werkzeuges.

Um eine genaue Einstellung der Winkellage der Auswuchtgewichte gegenueber dem Werkzeughalter durchfuehren zu koennen, ist am Rand der Umgangsnute eine Strichskala vorgesehen, und an den Auswuchtgewichten ist eine Strichskala nach Art eines Nonius angebracht.

Um die Abmessungen der Auswuchtvorrichtung moeglichst klein zu halten, ist die Umfangsnute so gestaltet, dass der Koerper der Auswuchtgewichte vollstaendig von der Nute aufgenommen wird.

Ein weiterer Vorteil der Erfindung ist darin zu sehen, dass die erfindungsgemaesse Vorrichtung ausgesprochen unfallsicher ausgebildet ist.

Selbst, wenn die mit dem Auswuchtvorgang beauftragte Person ein Festspannen der Auswuchtgewichte am Werkzeughalter durch Anziehen der Gewindestifte unterlassen sollte, besteht keine Gefahr, dass die Auswuchtgewichte waehrend des Drehvorganges des Werkzeughalters aus der Umfangsnute austreten.

Durch Vorsehen einer Hinterschneidung der Nute ist zwischen den Verdickungen der elastisch verformbaren Arme der Auswuchtgewichte und der Umfangsnute eine formschluessige Verbindung moeglich, die ein ungewolltes Austreten der Auswuchtgewichte aus der Umfangsnute verhindert.

Der Erfindungsgegenstand wird nun genauer anhand eines Ausfuehrungsbeispieles beschrieben und in den Zeichnungen dargestellt.

Es zeigen:
Figur 1, teilweise im Schnitt, einen Werkzeughalter, der den Schaft eines Bearbeitungswerkzeuges aufnimmt;
Figur 2, im Schnitt entlang der Linie F-F, den Werkzeughalter nach Figur 1;
Figur 3 im Schnitt ein Detail der Auswuchtvorrichtung;
Figur 4 in Ansicht ein Auswuchtgewicht;
Figur 5 in einer Draufsicht das Auswuchtgewicht nach Figur 4; und
Figur 6, in Ansicht und teilweise im Schnitt, einen Auswuchtring, der am zylindrischen Koerper eines Werkzeughalters befestigbar ist.

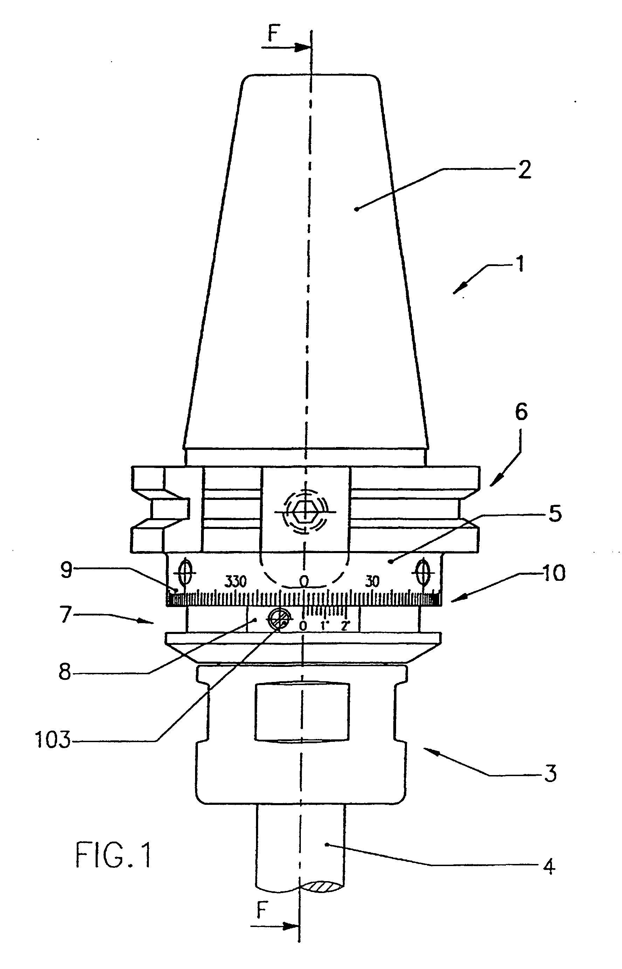

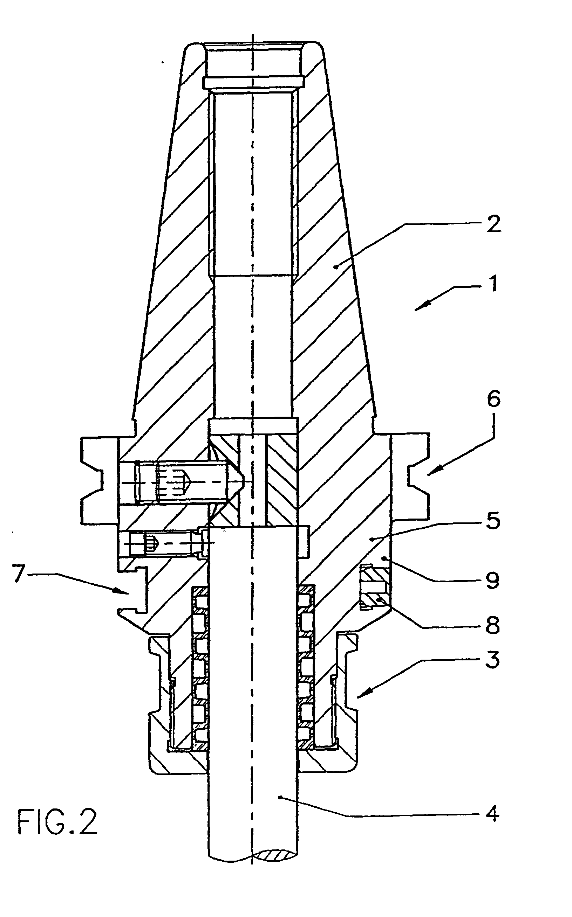

Den Figuren 1 und 2 kann ein Werkzeughalter 1 entnommen werden, der aus einem oberen Konusteil 2 besteht und zum Einfuehren des Werkzeughalters in die Spindel einer Werkzeugmaschine dient. Ferner ist eine an sich bekannte Vorrichtung 3 zum Befestigen des Schaftes 4 eines Werkzeuges dargestellt.

Der Koerper 5 des Werkzeughalters 1 weist eine bekannte Vorrichtung 6 zum Erfassen des Werkzeughalters mittels einer Greiferzange auf.

Im Koerper des Werkzeughalters ist eine Umfangsnute 7 eingearbeitet. Diese Umfangsnute 7 nimmt Auswuchtgewichte 8 auf.

Die Umfangsnute 7 und die Auswuchtgewichte 8 werden im Anschluss noch genauer beschrieben.

In vorteilhafter Weise werden zwei, drei oder vier Auswuchtgewichte 8 am Werkzeughalter 1 angeordnet.

Vor Durchfuehrung des Auswuchtvorganges sind die Auswuchtgewichte 8 mit gleichem gegenseitigen Abstand in der Nute 7 angordnet.

In vorteilhafter Weise ist ueber die gesamte Erstreckung eines Umfangsrandes 9 der Nute 7 eine Strichskala 10 vorgesehen.

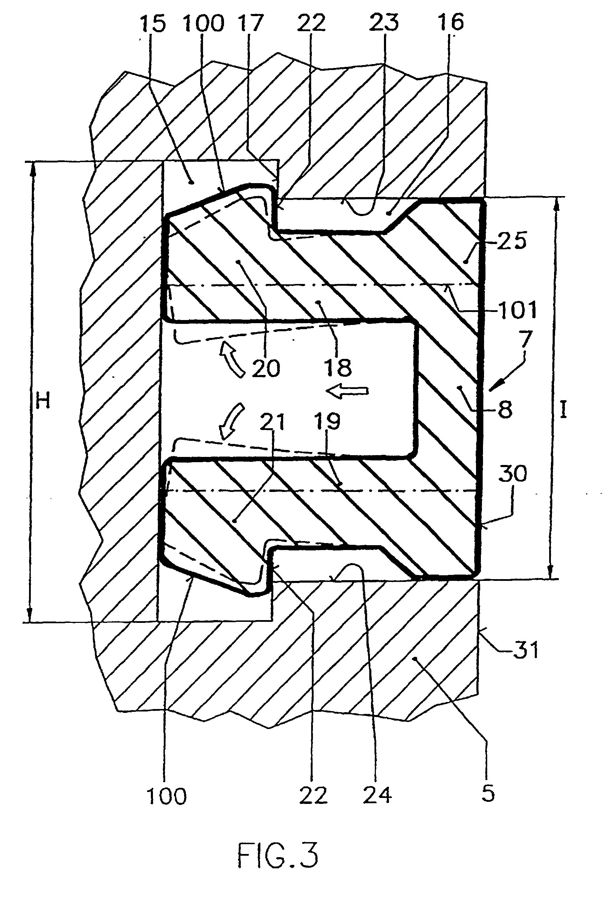

Der Figur 3 ist der konstruktive Aufbau der Umfangsnute 7 sowie der Auswuchtgewichte 8 zu entnehmen.

Die Umfangsnute 7 bildet einen Raum 15, der sich ringfoermig um den Werkzeughalter 1 erstreckt.

Der ringfoermige Raum 15 ist breiter ausgebildet als der Einlauf 16 (Einmuendung) der Nute 7.

Die Hoehe H des ringfoermigen Raumes 15 ist daher groesser als die Hoehe I der Einmuendung 16.

Der ringfoermige Raum 15 verbindet sich mit der Einmuendung 16 ueber eine Anschlagflaeche 17, die eine Hinterschneidung bildet.

Somit begrenzt die Umfangsnute 7 im Koerper 5 des Werkzeughalters eine Nute, die T-foermig ausgebildet ist.

Das Auswuchtgewicht 8 weist im Schnitt U-foermigen Aufbau auf.

Die Arme 18, 19 des U-foermig ausgebildeten Auswuchtgewichtes 8 sind elastisch verformbar.

In vorteilhafter Weise ist die Aussenflaeche der Arme 18 und 19 mit Abstand von den Flaechen 23, 34 der Einmuendung 16 vorgesehen.

Am freien Ende der Arme 18, 19 sind Verdickungen 20, 21 vorgesehen.

Die Verdickungen 20, 21 sind in den ringfoermigen Raum 15 einfuehrbar.

Die stufenartige Flaeche 22 der Verdickungen ist mit der eine Hinterschneidung bildenden Flaeche 17 des ringfoermigen Raumes 15 verbindbar.

Die Verdickungen 20, 21 verjuengen sich nach aussen und bilden Flaechen 100, die aufeinander zulaufen.

Diese konvergierenden Flaechen 100 sind ein wertvolles Hilfsmittel beim Einfuehren des Auswuchtgewichtes 8 in die Muendung 16 der Umfangsnute 7.

Die Basis 25 des Auswuchtgewichtes 8 liegt seitlich an den Flaechen 23, 24 an.

Diese Flaechen 23, 24 begrenzen die Muendung 16 der Umfangsnute 7.

In vorteilhafter Weise, nach Einfuehren des Auswuchtgewichts 8 in die Umfangsnute 7, fluchtet die Aussenflaeche 30 mit der Aussenflaeche 31 des Koerpers 5 des Werkzeughalters.

Das Auswuchtgewicht 8 weist eine durchgehende Gewindebohrung 101 auf. Die Gewindebohrung 101 ist zwischen den elastisch verformbaren Armen 18, 19 angeordnet.

In die Gewindebohrung 101 ist ein Gewindestift 103 eingeschraubt, der zum Festlegen des Auswuchtgewichtes in der Umfangsnute 7 dient.

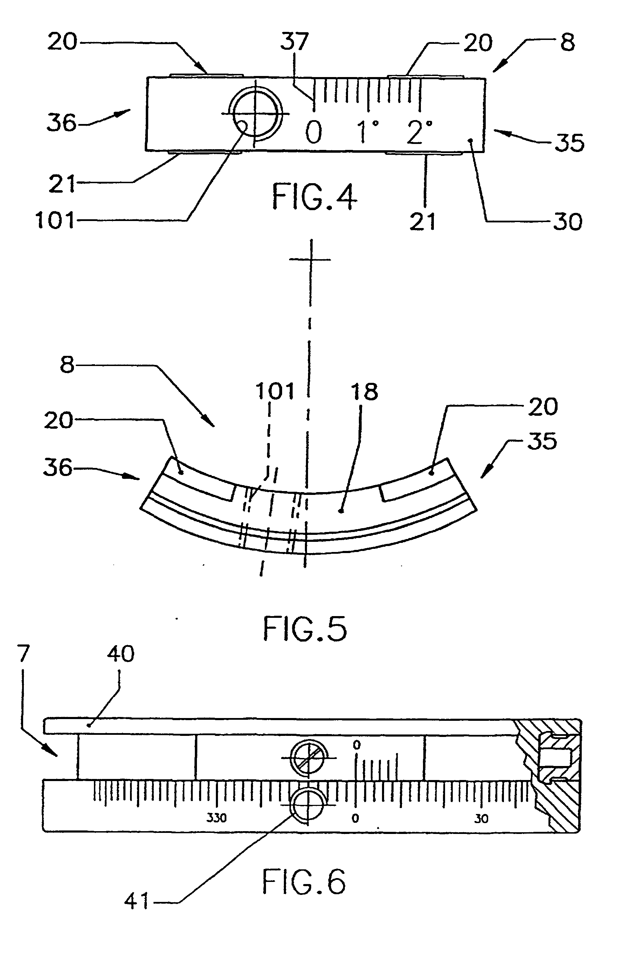

Den Figuren 4, 5 und 6 kann eine besondere Ausfuehrungsform des Auswuchtsgewichtes 8 entnommen werden.

Das Auswuchtgewicht 8 weist in diesem Fall Form eines Kreisabschnittes auf.

Von dem konkaven Teil des Auswuchtgewichtes 8 erstrecken sich parallel zueinandern angeordnete und elastisch verformbare Arme 18 und 19.

In der Naehe der Kopfenden 35, 36 der elastisch verformbaren Arme 18, 19 sind aussenseitig Verdickungen 20, 21 vorgesehen.

Die Flaeche 30 des Grundkoerpers 25 des Auswuchtgewichtes 8 weist eine Strichskala 37 auf, die als Nonius ausgebildet ist.

In vorteilhafter Weise ist die Strichskala 37 einer Strichskala 10 zugeordnet, die am Begrenzungsrand 9 der Umfangsnute 7 vorgesehen ist.

Der Figur 6 kann eine weitere Ausfuehrungsform der Erfindung entnommen werden.

Die Umfangsnute 7 besteht aus einem ringfoermigen Koerper 40, der abnehmbar mit einer zylindrischen Ausnehmung, die in den Koerper 5 des Werkzeughalters 1 eingearbeitet ist, verbunden ist.

Der ringfoermige Koerper 40 weist eine durchgehende Gewindebohrung 41 auf, die einen Gewindestift aufnimmt, der in eine Gewindebohrung, die in der zylindrischen Ausnehmung des Koerpers 5 des Werkzeughalters 1 vorgesehen ist, einschraubbar ist.

Unter Zuhilfenahme der Figuren 1 bis 3 wird nun die Arbeitsweise der erfindungsgemaessen Vorrichtung genauer beschrieben.

Abhaengig von der zu erwartenden Unwucht und unter Beruecksichtigung der Genauigkeit, mit der der Auswuchtvorgang vorzunehmen ist, werden in die Nute 7 Auswuchtgewichte 8 aus geeignetem Material und mit bestimmter Laenge eingesetzt.

Durch Anlegen der auseinanderlaufenden Flaechen 100 der endseitig vorgesehenen Verdickungen 20, 21 an die Muendung 16 der Umfangsnute 7 und durch Ausueben eines Druckes auf die Aussenflaeche 30 des Grundkoerpers 25 wird eine elastische Verformung der Arme 18, 19 erreicht.

Durch die elastische Verformung der Arme 18, 19 naehern sich die Verdickungen 20, 21 und erlauben ein Einfuehren des Auswuchtgewichtes 8 in die Nute 16.

Der Einfuehrvorgang des Auswuchtgewichtes 8 in die Umfangsnute 7 wird solange fortgesetzt, bis die Verdickungen 20, 21 vollstaendig in den ringfoermigen Raum 15 eingetreten sind und den Armen 18, 19 erlauben, in ihre nach aussen gerichtete Ruhelage zurueckzuschwenken.

In dieser Stellung befindet sich die aeussere Flaeche 22 der Verdickungen 20, 21 im Anschlag mit der eine Hinterschneidung bildenden Flaeche 17 des ringfoermigen Raumes 15.

Nach vollstaendigem Einfuehren des Auswuchtgewichtes 8 in die Umfangsnute 7 tritt der Grundkoerper 25 seitlich mit den Begrenzungsflaechen 23, 24 der Nute in Kontakt, wodurch jegliche Querbewegung des Auswuchtgewichtes gegenueber der Nute vermieden wird.

Dank der sich einstellenden, formschluessigen Verbindung zwischen den Verdickungen 20, 21 und dem Anschlag des ringfoermigen Raumes 15 (ohne dabei die elastische Bewegung der Arme 18, 19 zu behindern), wird vermieden, dass das Auswuchtgewicht bei einer Drehung des Werkzeughalters aus der Nute 7 austritt.

Das Auswuchtgewicht 8 steht lediglich ueber den Grundkoerper 25 mit den Begrenzungsflaechen 23, 24 der Muendung 16 in Beruehrung.

Deshalb setzt sich dem Auswuchtgewicht 8 nur ein kleiner Widerstand bei einem Verschieben im Inneren der Nute 7 entgegen.

Die Auswuchtgewichte 8 koennen daher frei in der Umfangsnute verschoben werden. Dadurch kann die Lage der Schwerpunktachse des Werkzeughalters gegenueber seiner Drehachse veraendert werden.

Dank der Strichskala 6, die entlang einem Rand der Umfangsnute vorgesehen ist, und dank einer als Nonius ausgebildeten Strichskala 37 am Auswuchtgewicht 8 wird es moeglich, die Winkellage des Auswuchtgewichtes 8 genau innerhalb der Nute 7 zu veraendern und einzustellen, um ein genaues Auswuchten des Werkzeughalters 1 sowie des mit diesem verbundenen Werkzeuges zu erreichen.

Um zu vermeiden, dass waehrend der Drehbewegung des Werkzeughalters 1 ein Verschieben des Auswuchtgewichtes 8 in der Nute 7 erfolgt, wird in die Gewindebohrung 101 des Auswuchtgewichtes 8 ein Gewindestift 103 eingeschraubt.

Durch Einschrauben des Gewindestiftes 103 erfolgt ein Auseinanderspreizen der elastischen Arme 18, 19 nach aussen.

Durch das Auseinanderspreizen der Arme 18, 19 tritt der Gewindestift 103 mit dem Grund der Nute 7 in Kontakt und drueckt die Verdickungen 20, 21 gegen die Oberflaeche 17 des ringfoermigen Koerpers 15; dadurch wird das Auswuchtgewicht 8 in einer gewuenschten Lage blockiert.

## Patentansprüche

1. Rotierender Werkzeughalter (1) mit einer Auswuchtvorrichtung, die Auswuchtgewichte (8) aufnimmt, die gegenueber dem Koerper (5) des Werkzeughalters (1) in ihrer Lage einstellbar sind, **dadurch gekennzeichnet, dass** der Koerper (5) des Werkzeughalters (1) eine Umfangsnute (7) aufweist, die T-foermigen Querschnitt hat und diese Umfangsnute (7) Auswuchtgewichte (8) aufnimmt, die im Querschnitt U-foermig ausgebildet sind und die Arme (18, 19) der U-foermigen Auswuchtgewichte (8) elastisch verformbar ausgebildet sind und an ihren Enden Verdickungen (20, 21) aufweisen, die mit einem hinterschnittenen Teil der Umfangsnut (7) verbindbar sind, und im Koerper der Auswuchtgewichte (8) eine durchgehende Gewindebohrung (101) vorgeshen ist, die einen Gewindestift (103) zum Festlegen der Lage des Auswuchtgewichtes (8) in der Nute (7) aufweist.

2. Werkzeughalter (1), nach Patentanspruch 1, **dadurch gekennzeichnet, dass** entlang einem Rand (9) der Umfangsnute (7) eine Strichskala (10) vorgesehen ist.

3. Werkzeughalter (1), nach Patentanspruch 1, **dadurch gekennzeichnet, dass** das Auswuchtgewicht (8) eine als Nonius ausgebildete Strichskala (37) aufweist.

4. Werkzeughalter (1), nach Patentanspruch 1, **dadurch gekennzeichnet, dass** die Umfangsnute (7) den Koerper eines Auswuchtgewichtes (8) vollstaendig aufnimmt.

5. Werkzeughalter (1), nach Patentanspruch 1, **dadurch gekennzeichnet, dass** die Umfangsnute (7), die das Auswuchtgewicht (8) aufnimmt, in einem Ringkoerper (40) angeordnet ist, und der Ringkoerper (40) abnehmbar mit dem Koerper des Werkzeughalters (1) verbunden ist.

## Claims

1. Rotating tool holder (1) having a balancing device which accommodates balancing weights (8) which are adjustable in their position relative to the body (5) of the tool holder (1), **characterized in that** the body (5) of the tool holder (1) has a circumferential groove (7) which has a T-shaped cross section, and this circumferential groove (7) accommodates balancing weights (8) which are of U-shaped design in cross section, and the arms (18, 19) of the U-shaped balancing weights (8) are designed to be elastically deformable and have thickened portions (20, 21) at their ends, and these thickened portions (20, 21) can be connected to an undercut part of the circumferential groove (7), and a tapped through-hole (101) is provided in the body of the balancing weights (8), this tapped through-hole (101) having a grub screw (103) for securing the position of the balancing weight (8) in the groove (7).

2. Tool holder (1) according to Patent Claim 1, **characterized in that** a graduated scale (10) is provided along the margin (9) of the circumferential groove (7).

3. Tool holder (1) according to Patent Claim 1, **characterized in that** the balancing weight (8) has a graduated scale (37) designed as a vernier.

4. Tool holder (1) according to Patent Claim 1, **characterized in that** the circumferential groove (7) completely accommodates the body of a balancing weight (8).

5. Tool holder (1) according to Patent Claim 1, **characterized in that** the circumferential groove (7) which accommodates the balancing weight (8) is arranged in an annular body (40), and the annular body (40) is removably connected to the body of the tool holder (1).

## Revendications

1. Porte-outils (1) rotatif avec un dispositif anti-balourd qui reçoit des poids d'équilibrage (8) dont la position par rapport au corps (5) du porte-outils (1) est ajustable, **caractérisé en ce que** le corps (5) du porte-outils (1) présente une rainure périphérique (7) à section transversale en forme de T, cette rainure périphérique (7) recevant des poids d'équilibrage (8) dont la section transversale est configurée en U, les branches (18, 19) des poids d'équilibrage (8) en forme de U étant élastiquement déformables et présentant à leur extrémité des épaississements (20, 21) qui peuvent être reliées à la rainure périphérique (7) par une partie en contre-dépouille, et le corps (8) du porte-outils (101) est traversé par un alésage fileté (103) pour fixer la position du poids d'équilibrage (8) dans la rainure (7).

2. Porte-outils (1) selon la revendication 1, **caractérisé en ce qu'**une échelle graduée (10) est prévue le long d'un bord (9) de la rainure périphérique (7).

3. Porte-outils (1) selon la revendication 1, **caractérisé en ce que** le poids d'équilibrage (8) présente une échelle graduée (37) configurée en vernier.

4. Porte-outils (1) selon la revendication 1, **caractérisé en ce que** la rainure périphérique (7) reçoit entièrement le corps d'un poids d'équilibrage (8).

5. Porte-outils (1) selon la revendication 1, **caractérisé en ce que** la rainure périphérique (7) qui reçoit le poids d'équilibrage (8) est disposée dans un corps annulaire (40), le corps annulaire (40) étant relié de manière libérable au corps du porte-outils (1).
